# EUROPEAN PATENT APPLICATION

(11) **EP 4 570 362 A1**
(43) Date of publication of application: **18.06.2025**
(21) Application number: 23216813.8
(22) Date of filing: 14.12.2023
(51) Int. Cl.: B01D 63/02, B01D 65/00

(54) **POTTING MANIFOLD**

(71) Applicant: Gambro Lundia AB, 226 43 Lund (SE)
(72) Inventor: Melis, Robert, 72336 Balingen (DE); Maier, Edgar, 72461 Albstadt (DE)
(74) Representative: Perchenek, Nils

(57) **Abstract**

The present disclosure relates to an apparatus for potting hollow fiber membranes in a diffusion and/or filtration device, e.g., an ultrafilter or a capillary dialyzer.

## Description

### Technical Field

The present disclosure relates to an apparatus for potting hollow fiber membranes in a diffusion and/or filtration device, e.g., an ultrafilter or a capillary dialyzer.

### Description of the Related Art

Diffusion and/or filtration devices comprising hollow fiber membranes are widely used for separation or purification of liquids. Examples are ultrafilters used for water purification; plasma filters for the separation of plasma from blood; capillary dialyzers for blood purification in patients suffering from renal insufficiency, i.e., for treatment of the patients by hemodialysis, hemodiafiltration or hemofiltration; etc. A multitude of different models of diffusion and/or filtration devices comprising hollow fiber membranes is commercially available.

The devices generally consist of a housing comprising a tubular section with end caps capping the mouths of the tubular section. A bundle of hollow fiber membranes is arranged in the housing in a way that a seal is provided between a first flow space formed by the fiber cavities and a second flow space surrounding the membranes on the outside. The seal generally is provided by end wall means within the housing formed by a polymer mass in which the ends of the hollow fiber membranes are embedded.

Polyurethane resin is commonly used as potting compound or curable liquid sealant. Isocyanate and polyol are dosed into a mixer, e.g., a mixing head, and the reacting mixture is introduced into the housing of the diffusion and/or filtration device via a disposable manifold. As small amounts of the polyurethane resin remain in the mixing unit and on the surfaces of the manifold and form incrustations upon curing of the resin, it is necessary to regularly flush the mixing unit and to replace the disposable manifold.

GB 2016358 A describes a method of potting the ends of a hollow fiber bundle in a hollow fiber dialyzer. The method comprises inserting the bundle in a tubular casing, closing the ends of the casing with closure members, providing curable liquid sealant in the casing, spinning the casing to cause the sealant to spread itself around the ends of the hollow fibers, allowing the sealant to set, and then removing the closure members and cutting through the ends of the fibers and the sealant, or alternatively cutting through the closure members instead of removing them.

WO 1984/002486 A1 discloses another method for making a hollow fiber separation device which includes the steps of forming an integral structure which comprises at least one tubular housing portion; and an elongated chamber portion extending in elongated relation to the tubular housing portion and communicating with the housing portion adjacent opposed ends thereof. An aperture is provided in a central area of the elongated chamber. Hollow fibers for diffusion are introduced into the housing and the ends of the housing portion are closed. The structure is spun on an axis between the ends, and potting compound is added to the chamber portion through the aperture. The potting compound migrates radially outwardly through the chamber to the closed ends of the housing portion, to encase the ends of the hollow fibers in the potting compound. After curing of the potting compound, the ends of the tubular housing portion are transversely cut to expose open bores of the hollow fibers, and flow manifold end cap members are applied to the cut tubular housing ends.

EP 3 620 228 A1 discloses a process for making a filtration and/or diffusion device comprising a bundle of hollow fiber membranes in a tubular housing. The process involves sealing the ends of the fibers and the mouths of the tubular housing with a thermoplastic resin.

JPS 63-296764 A discloses a potting container having a lid engaged with the upper surface part of a main body having a potting agent received therein and a potting agent introducing port is provided on the lid body. The side wall part of the main body is inclined so that the angle defined by the side wall part and bottom surface part of the main body forms an acute angle. Outflow ports for the potting agent are provided along the side wall part inclined at the acute angle.

JP 2008-279374 A discloses a container for injecting a potting material, comprising: a main body for storing the potting material; and an injection nozzle for injecting the potting material from a cylindrical liquid inflow / outflow nozzle provided on the body side of the hollow fiber membrane module. The injection nozzle has a shape that fits into the liquid inflow / outflow nozzle, has one or more protrusions on its outer wall, and satisfies the following formulas (1) to (3): 0 ≦ A-B ≦ 0.015 (1) 0.1 ≦ C ≦ 0.2 (2) -90 ≦ D ≦ 90 (3) wherein A denotes an outside diameter (mm) of a part excluding the protrusions of the nozzle, B denotes an inside diameter of the nozzle, C denotes the total (mm) of the height of each protrusion, and D denotes an installation position (°) of the protrusion in the outer wall circumference.

JP 2009-131746 A discloses a potting material injection vessel having a central distributor with a bottom and facing sidewalls raised from the bottom, and injection nozzles separated from the central distributor. The injection nozzles are attached to ends of the facing sidewalls opposite to a central axis of the central distributor and have a reservoir for the potting material. The reservoir extends from the upstream side to the downstream side. The container has a tapered shape and is inclined with respect to the central axis direction of the central distributor. The bottom has the shape of a cone or a truncated cone.

It is an objective of the present disclosure to provide an improved disposable potting manifold.

### Summary

The present disclosure provides a disposable manifold for potting hollow fiber membranes in a diffusion and/or filtration device. The present disclosure also provides a process for making the potting manifold and use of the potting manifold.

### Brief Description of the Drawings

- Figure 1: is a schematic perspective view of a manifold of the present disclosure,
- Figure 2: is a schematic side view of the manifold of Figure 1,
- Figure 3: is a schematic front view of the manifold of Figure 1,
- Figure 4: is a schematic bottom view of the manifold of Figure 1,
- Figure 5: is a schematic perspective view of a welding station used in producing the manifold of the present disclosure,
- Figure 6: is a schematic front view of the welding station of Figure 5.

### Detailed Description

The present disclosure provides a device for potting hollow fiber membranes in a diffusion and/or filtration device, e.g., a hemodialyzer, a plasma filter, or an ultrafilter. The potting device is a disposable manifold.

The potting manifold of the present disclosure comprises a four-pronged container having a planar bottom and a surrounding external wall extending upwards from the bottom. At the tip of each prong of the container, a tubular outlet spout extends downwards from the bottom of the container. The height of the surrounding external wall is larger in the areas near the tips of the prongs than the height of the remaining external wall, forming U-shaped tabs extending upwards from the top edge of the external wall.

In some embodiments, the potting manifold has an oblong shape. In some embodiments, the maximum length of the potting manifold is in the range of from 230 to 240 mm, the maximum width is in the range of from 85 to 90 mm, and the maximum height is in the range of from 130 to 140 mm.

The four-pronged container has a planar bottom and a surrounding external wall extending upwards from the bottom. In some embodiments, the external wall is perpendicular to the bottom, i.e., the angle between bottom and external wall is 90°. In some embodiments, the height of the surrounding external wall is in the range of from 25 to 50 mm. The height of the surrounding external wall is larger in the areas near the tips of the prongs than the height of the remaining external wall, where the height is uniform. In some embodiments, the height of the external wall is in the range of from 40 to 50 mm near the tips of the prongs, and in the range of from 25 to 35 mm in the remaining area of the external wall. At the tips of the prongs, U-shaped tabs extending upwards from the top edge of the external wall are formed. In some embodiments, the height of the U-shaped tabs is in the range of from 10 to 20 mm, e.g., 15 mm.

In some embodiments, the bottom of the container comprises a central cruciform ridge separating the prongs from each other. In some embodiments, the legs of the ridge have a width in the range of from 9 to 10 mm. In some embodiments, the height of the ridge is in the range of from 8 to 10 mm. In some embodiments, the apex angle of the cruciform ridge is in the range of from 40° to 50°, e.g., 45°. The cruciform ridge allows for partitioning a liquid potting resin poured into the container into four equal volumes.

At the tip of each prong of the container, a tubular outlet spout extends downwards from the bottom of the container. In some embodiments, the inner diameter of the tubular outlet spouts in in the range of from 4 to 6 mm. In some embodiments, the four tubular outlet spouts of the manifold form two pairs of diametrically opposed tubular outlet spouts of different lengths. In some embodiments, the spouts of one pair are longer than the spouts of the other pair, the difference being in the range of from 50 to 60 mm. The different lengths of the pairs of tubular outlet sprouts allows for having two filtration and/or potting devices attached to the manifold at the same time.

In some embodiments, a plurality of tongues is provided on the outside of the surrounding external wall, at the top edge of the surrounding external wall and facing outwards. These tongues increase the rigidity of the container wall, reducing deformation of the container during use.

In some embodiments, the prongs at the shorter faces of the potting manifold are joined by horizontal plates attached to the top edge of the surrounding external wall. These horizontal plates further increase the rigidity of the container wall, preventing deformation of the container during use. They also facilitate handling of the potting manifold by automated tools, e.g., robotic grippers.

The potting manifold is made of a thermoplastic polymer. In some embodiments, the potting manifold is made of a polyolefin. In an embodiment, the polyolefin is a polypropylene. In another embodiment, the polyolefin is a polyethylene.

The potting manifold features U-shaped tabs extending upwards from the top edge of the external wall at the tips of the prongs. In an embodiment of the potting manifold, the legs of the U-shaped tabs are joined to one another, forming a cover at the tips of the prongs of the container. The cover prevents the spilling of liquid potting resin from the potting manifold during use, especially when the manifold is rotated around its central axis to distribute the liquid potting resin within filtration and/or diffusion devices attached to the potting manifold. The integrated cover provided at the tips of the prongs replaces the lid required in prior art potting manifolds, dispensing with an additional component and reducing the amount of polymer material required for making the manifold.

The present disclosure also provides a process for making the potting manifold. The potting manifold is generally produced by injection molding. Suitable devices and processes for producing injection-molded parts from thermoplastic polymers are known in the art.

In some embodiments of the process, the legs of the U-shaped tabs located at the tips of the prongs of the potting manifold are joined to one another in a subsequent step, forming a cover at the tips of the prongs of the container. In an embodiment of the process, the legs of the U-shaped tabs are joined to one another by welding. In another embodiment of the process, the legs of the U-shaped tabs are joined to one another by gluing. Suitable adhesives are known in the art.

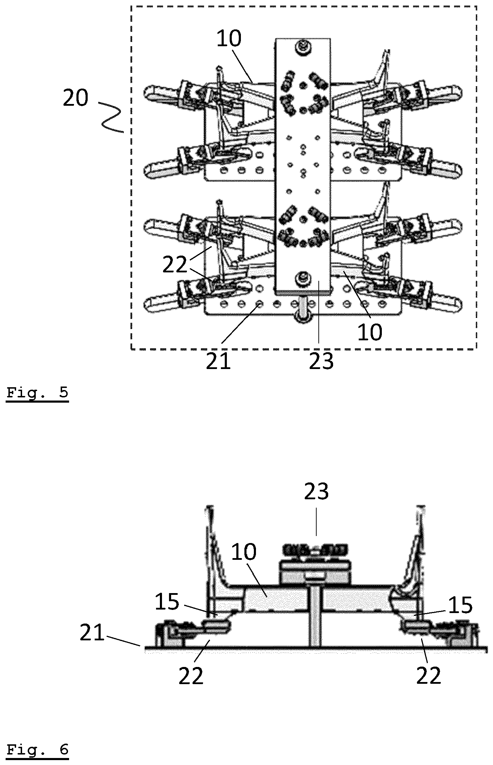

A suitable device for welding all four U-shaped tabs simultaneously is shown in Figs. 5 and 6. Heatable clamps are used to weld the legs of each of the U-shaped tabs to one another. The potting manifold is placed upside-down onto the welding station and the U-shaped tabs are introduced into the heatable clamps. The clamps are heated to melt the polymer material of the manifold and closed to weld the legs of each U-shaped tab to one another and form a closed cover.

The present disclosure also provides a use of the potting manifold in the potting of filtration and/or diffusion devices. In some embodiments, the use involves introducing a liquid potting resin, e.g., a reacting polyurethane mixture, into two filtration and/or diffusion devices simultaneously. The diffusion and/or filtration devices typically comprise a tubular housing with a bundle of hollow fiber membranes arranged therein and at least one tubular fluid port located on the outer wall surface of the tubular housing.

In a typical potting procedure, a reacting polyurethane mixture is dosed into the disposable manifold which is connected to tubular fluid ports of the housings of two diffusion and/or filtration devices. The reacting polyurethane mixture enters the diffusion and/or filtration devices through the tubular fluid ports.

Each diffusion and/or filtration device is rotated around a central axis which is perpendicular to the longitudinal axis of the housing, thereby transporting the reacting polyurethane mixture towards an end of the housing where the polyurethane mixture sets and forms an end wall.

The advantages of the potting manifold of the present disclosure and its production process include reduced material and manufacturing costs, as the potting manifold does not require a lid, and a reduction of the required equipment and investment, as only one injection molding machine and one injection molding tool are needed to produce the potting manifold.

Exemplary embodiments of the device and the process of the present disclosure are shown in the accompanying figures and are described below.

### Detailed Description of the Drawings

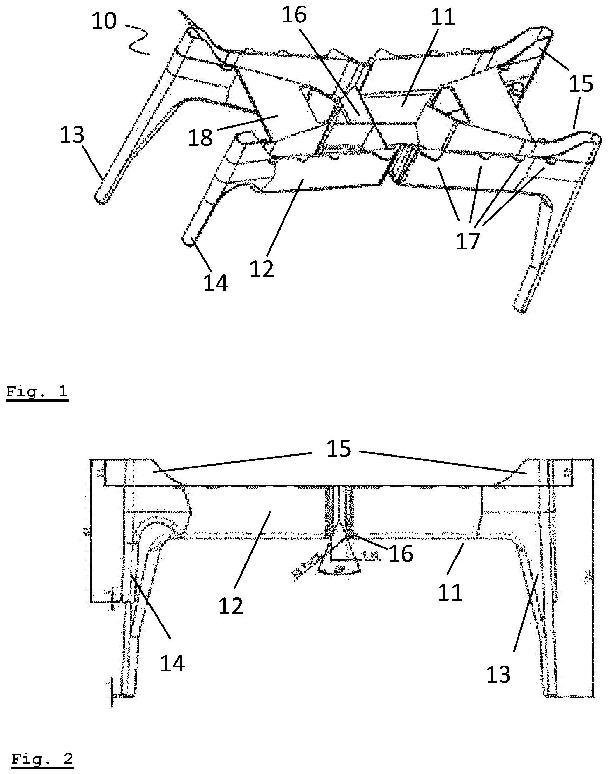

Figure 1 is a schematic perspective view of a potting manifold 10 of the present disclosure. The potting manifold 10 comprises a four-pronged container having a planar bottom 11 and a surrounding external wall 12 extending upwards from the bottom 11. The bottom 11 of the container comprises a central cruciform ridge 16 separating the prongs from each other. The height of the surrounding external wall 12 is larger in the areas near the tips of the prongs than the height of the remaining external wall, forming U-shaped tabs 15 extending upwards from the top edge of the external wall 12. A plurality of tongues 17 is provided on the outside of the surrounding external wall 12, at the top edge of the surrounding external wall 12 and facing outwards. Horizontal plates 18 are located between the prongs at the short faces of the potting manifold 10 at the top edge of the surrounding external wall 12 and joining the prongs. At the tip of each prong of the container, a tubular outlet spout 13, 14 extends downwards from the bottom 11 of the container. As shown in the figure, the pair of first tubular outlet spouts 13 are longer than the pair of second tubular outlet spouts 14.

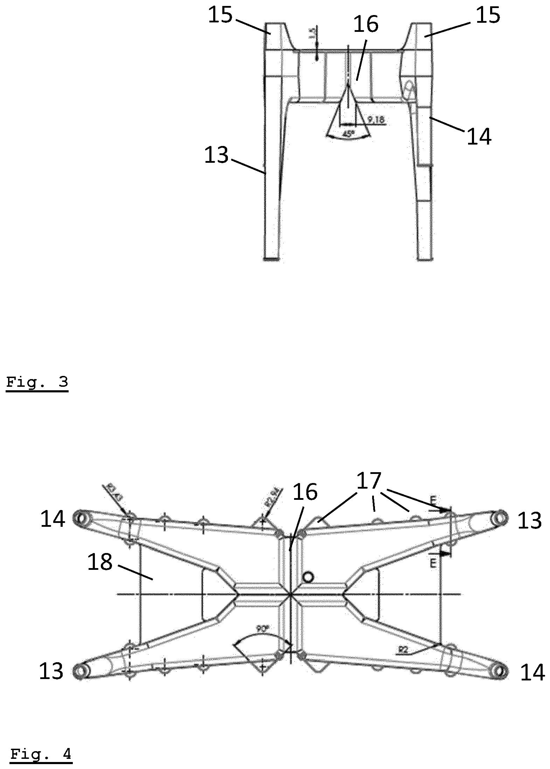

Figure 2 is a schematic side view of the potting manifold of Figure 1, Figure 3 is a schematic front view of the potting manifold of Figure 1, and Figure 4 is a schematic bottom view of a manifold of the present disclosure. As shown in Figs. 2 and 3, the apex angle of the cruciform ridge 16 is 45°, and its width at the base is 9.18 mm.
Figure 5 is a schematic perspective view of a welding station 20 used in producing the manifold 10 of the present disclosure. The welding station 20 accommodates two potting manifolds 10. Two base plates 21 are provided, each carrying four heatable clamps 22. The potting manifolds 10 are fixed to a holder 23, and the U-shaped tabs 15 of the potting manifolds 10 are introduced into the heatable clamps 22 for welding.
Figure 6 is a schematic front view of the welding station of Figure 5.

### List of reference signs

10 potting manifold
11 bottom
12 external wall
13 first tubular outlet spout
14 second tubular outlet spout
15 U-shaped tab
16 cruciform ridge
17 horizontal tongue
18 horizontal plate
20 welding station
21 base plate
22 heatable clamp
23 holder

## Claims

1. A potting manifold (10) comprising a four-pronged container having a planar bottom (11) and a surrounding external wall (12) extending upwards from the bottom (11), and at the tip of each prong of the container, a tubular outlet spout (13, 14) extending downwards from the bottom (11) of the container, wherein the height of the surrounding external wall (12) is larger in the areas near the tips of the prongs than the height of the remaining external wall (12), forming U-shaped tabs (15) extending upwards from the top edge of the external wall (12).

2. The potting manifold (10) of claim 1, wherein the bottom (11) of the container comprises a central cruciform ridge (16) separating the prongs from each other.

3. The potting manifold (10) of claims 1 or 2, wherein the four tubular outlet spouts (13, 14) of the manifold form two pairs (13, 14) of diametrically opposed tubular outlet spouts of different lengths.

4. The potting manifold (10) of any one of claims 1 to 3, which is made of a polyolefin.

5. The potting manifold (10) of any one of claims 1 to 4, wherein the legs of the U-shaped tabs (15) are joined to one another, forming a cover at the tips of the prongs of the container.

6. A process for making a potting manifold, comprising the steps of forming a potting manifold (10) according to any one of claims 1 to 4 by injection molding and subsequently joining the legs of each U-shaped tab (15) to one another.

7. The process of claim 6, wherein the legs of each U-shaped tab (15) are joined to one another by welding.

8. Use of the potting manifold of any one of claims 1 to 5 in the potting of filtration and/or diffusion devices.

9. The use of claim 8, which involves introducing a liquid potting resin into two filtration and/or diffusion devices simultaneously.
